# EUROPÄISCHE PATENTANMELDUNG

(11) **EP 4 119 923 A1**
(43) Veröffentlichungstag der Anmeldung: **18.01.2023**
(21) Anmeldenummer: 22185295.7
(22) Anmeldetag: 15.07.2022
(51) Int. Cl.: G01N 11/14

(54) **MESSGERÄT UND VERFAHREN ZUR BESTIMMUNG VON EIGENSCHAFTEN EINES VISKOELASTISCHEN MATERIALS**

(30) Priorität: 16.07.2021 DE 102021118415
(71) Anmelder: Bareiss Prüfgerätebau GmbH, 89610 Oberdischingen (DE)
(72) Erfinder: Wirth, Oliver, 89584 Ehingen (DE)
(74) Vertreter: Baur & Weber Patentanwälte PartG mbB

(57) **Zusammenfassung**

Es wird ein Messgerät, insbesondere ein Messgerät (2) vom Typ eines Rheometers, und ein Verfahren zur Bestimmung von Eigenschaften eines viskoelastischen Materials beschrieben, welches in einem temperaturgeregelten Probenraum (30) zwischen einer mit einem Sensor (28) versehenen oberen Kammerhälfte (4) und einer relativ zur oberen Kammerhälfte (4) verdrehbaren unteren Kammerhälfte (14) eingebracht oder einbringbar ist, wobei die untere Kammerhälfte (14) motorisch angetrieben oder antreibbar ist, wobei die untere Kammerhälfte (14) mit wenigstens einem Schleifring (26) verbunden ist, der einen elektrischen Pfad ins Innere des Probenraums (30) an der unteren Kammerhälfte (14) schafft, so dass die untere Kammerhälfte (14) in Bezug zur oberen Kammerhälfte (4) um einen Drehwinkel über 360° verdrehbar ist.

## Beschreibung

Die Erfindung betrifft ein Messgerät, insbesondere ein Messgerät vom Typ eines Rheometers, und ein Verfahren zur Bestimmung von Eigenschaften eines viskoelastischen Materials.

Aus dem allgemeinen Stand der Technik sind Rheometer mit einem geschlossenen Kammersystem bekannt. Derartige Messgeräte werden dem englischen Sprachgebrauch folgend häufig auch als RPA-Messgerät bezeichnet (RPA = rubber process analyser, Gummiprozessanalysator). Zur Messung werden Gummimischungen in einer Kammer zwischen zwei Kammerwänden eingebracht, welche gegeneinander oszillieren. Typischerweise werden dabei Auslenkungen im Bereich von 0,001° bis 360° in beiden Drehrichtungen erreicht. Die Frequenz dieser Drehbewegungen kann über einen großen Bereich von 0,001 Hz bis 100 Hz reichen. Ebenso ist es bekannt, das Drehmoment im Bereich einiger 100 µNm bis ca. 25 Nm zu variieren, wobei die Temperatur der Gummimischung während der Messung bis ca. 230 °C reichen kann.

Mit derartigen oszillierenden Rheometern ergibt sich die Möglichkeit, alle gängigen Messungen bei der Gummimischung Entwicklung durchzuführen. Neben einer Relaxation bzw. Mehrfach-Wellen-Messung (multi wave), sowie eine isotherme bzw. an-isotherme Messung und eines Amplituden- bzw. Frequenzdurchlaufs gehört auch der sogenannte Sprung- bzw. Rampenversuch zum an sich bekannten Repertoire von gängigen Messungen.

So ist bereits aus der DE1648526A1 eine Vorrichtung zum Messen der Viskoelastizität von Kautschuk oder Kunststoffmaterialien bekannt, welche ausgebildet ist mit einem oberen und einem unteren Rahmen, einer Mehrzahl von Führungsstangen, welche in dem unteren Rahmen aufrechtstehen und den oberen Rahmen abstützen, einer oberen Schubplatte, die entlang wenigstens eines Paares der Führungsstangen senkrecht bewegbar ist, eine mit der oberen Schubplatte einheitliche mit Lagern versehene Lagerplatte, einer oberen Platte, die einheitlich mit der Lagerplatte senkrechte Bewegungen ausführen kann, und die an einer in dem Lager gelagerten Welle befestigt ist, welche in dem Lager drehbar ist, einer an dem unteren Rahmen schwenkbar angeordneten unteren Platte, einer Einrichtung zum Drücken der oberen Platte gegen die untere Platte, einer Einrichtung zum Hervorrufen einer hin- und hergehenden Winkelverschiebung der unteren Platte relativ zu der oberen Platte, und mit einer Einrichtung zum einzelnen Erhitzen der oberen und unteren Platte.

Aus der DE 10 2010 050 973 A1 ist ein Rheometer oder Viskosimeter mit einem erste Mess-Teil und einem zweiten Mess-Teil bekannt, zwischen denen ein Probenraum zur Aufnahme einer Materialprobe gebildet ist, und mit einer Antriebsvorrichtung, mittels der zumindest das zweite Mess-Teil sich dreht und/oder oszilliert, wobei die Antriebsbewegung der Antriebsvorrichtung über ein Transmissionselement auf das zweite Mess-Teil übertragbar ist, wobei die Antriebsvorrichtung auf der dem zweiten Mess-Teil abgewandten Seite des ersten Mess-Teils angeordnet ist und dass das Transmissionselement das erste Mess-Teil durchdringt.

Bei bisher bekannten Messgeräten tritt oftmals das Problem auf, dass die damit gemessenen Viskositäten als Funktion der Zeit trotz maximaler Auslenkung von 360° keinen an sich für derartige Messungen erforderlichen Plateauwert erreichen, so dass die tatsächlichen Materialeigenschaften lediglich abgeschätzt werden können.

Ausgehend von diesem Stand der Technik stellt sich nun die Aufgabe, ein Messgerät und ein Verfahren zur Messung von Eigenschaften eines viskoelastischen Materials anzugeben, welches die oben genannten Probleme überwinden und verbesserte Eigenschaften aufweisen.

Diese Aufgabe wird durch die Merkmale der nebengeordneten Ansprüche gelöst. Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Gemäß der Erfindung wird ein Messgerät zur Bestimmung von Eigenschaften eines viskoelastischen Materials angegeben, insbesondere vom Typ eines Rheometers, welches in einem in seinem Inneren temperaturgeregelten Probenraum zwischen einer mit einem Sensor versehenen oberen Kammerhälfte und einer relativ zur oberen Kammerhälfte verdrehbaren unteren Kammerhälfte eingebracht oder einbringbar ist, wobei die untere Kammerhälfte motorisch angetrieben oder antreibbar ist, wobei die untere Kammerhälfte mit wenigstens einem Schleifring verbunden ist, der einen elektrischen Pfad ins Innere des Probenraums an der unteren Kammerhälfte schafft, so dass die untere Kammerhälfte in Bezug zur oberen Kammerhälfte um einen Drehwinkel über 360° verdrehbar ist.

Bei dem erfindungsgemäßen Messgerät wird das Innere des Probenraums temperaturgeregelt, was über eine elektrisch betriebene Wärmequelle bewirkt wird, die sowohl an der oberen Kammerhälfte als auch an der unteren Kammerhälfte angeordnet ist. Dadurch kann ein geschlossenes, abgedichtetes Kammersystem aus oberer Kammerhälfte und unterer Kammerhälfte bereitgestellt werden, ohne dabei auf die bereits aus dem Stand der Technik bekannte Beheizung durch einen um die Kammer angeordneten Ofen zurückgreifen zu müssen. Zur Regelung der Temperatur im Probenraum ist daher mindestens ein elektrischer Pfad nötig, um die Wärmequelle mit elektrischer Energie versorgen zu können.

Der eine elektrische Pfad kann zusammen mit der Gehäusemasse als Strompfad zur Energiezuführung verwendet werden, während eine Temperaturmessung auch kontaktlos möglich wäre. In der Praxis werden jedoch mehrere elektrische Pfade ausgebildet sein, die sowohl zur Verbindung mit einem Temperatursensor als auch zur Energiezuführung verwendet werden. Bei einem kabelgebundenen System ist jedoch die Auslenkung der beiden Kammerhälften zueinander limitiert. Hier setzt die Erfindung an. In dem die Zuführung von elektrischer Energie über den elektrischen Pfad ins Innere des Probenraum an der unteren Kammerhälfte über einen Schleifring erfolgt, ist es möglich, die untere Kammerhälfte um mehr als 360° zu drehen, ohne auf sich aufwickelnde Kabel Rücksicht nehmen zu müssen. Insbesondere beim sogenannten Sprungversuch erweist sich diese Vorgehensweise als vorteilhaft, da nun keine Limitierung bezüglich der Auslenkung mehr besteht. Beim Sprungversuch wird eine Kammerhälfte mithilfe des motorischen Antriebs in definierter Zeit stark ausgelenkt und das resultierende Drehmoment an der anderen Kammerhälfte gemessen. Die Sprungantwort, das heißt das Drehmoment sollte sich als konstanter Wert einstellen, um eine aussagekräftige Messung der Viskosität schaffen zu können. Sollte noch kein Plateauwert erreicht sein, war die Auslenkung nicht ausreichend, wobei nun mittels des Schleifrings eine Auslenkung von größer 360° möglich ist, um die oben beschriebene Limitierung bezüglich der Auslenkung aufzuheben.

Gemäß einer Ausführungsform des erfindungsgemäßen Messgeräts ist die untere Kammerhälfte in Bezug zur oberen Kammerhälfte um einen beliebigen Drehwinkel und eine beliebige Zahl von Umdrehungen verdrehbar.

Wie bereits erwähnt, besteht keinerlei Limitierung bezüglich der maximal möglichen Auslenkung der unteren Kammerhälfte in Bezug zur oberen Kammerhälfte mehr. Demnach ist es möglich, einen beliebigen Drehwinkel bzw. eine beliebige Zahl von Umdrehungen zu erreichen. In der Praxis wird die Auslenkung so gewählt werden, dass sich ein Plateauwert des resultierenden Drehmoments an der oberen Kammerhälfte einstellt.

Gemäß einer weiteren Ausführungsform des erfindungsgemäßen Messgeräts sind mehrere Schleifringe vorgesehen, die jeweils einen elektrischen Pfad ins Innere des Probenraums schaffen.

An sich wäre es ausreichend, lediglich einen elektrischen Pfad ins Innere des Proberaums zu schaffen, um die dort an der unteren Kammerhälfte angeordnete Wärmequelle mit elektrischer Energie zu versorgen. Der Stromkreis zur Wärmequelle könnte beispielsweise über die Gehäusemasse geschlossen werden. In einer bevorzugten Variante der Erfindung werden jedoch mehrere Schleifenringe vorgesehen sein, um neben der Versorgung mit elektrischer Energie beispielsweise auch Informationen eines Temperatursensors, welcher an der unteren Kammerhälfte angeordnet sein kann, zu übertragen.

Gemäß einer weiteren Ausführungsform des erfindungsgemäßen Messgeräts ermöglicht der oder die Schleifringe wenigstens den elektrischen Pfad zur Ansteuerung der Temperaturregelung im Inneren des Probenraums.

Das geschlossene Kammersystem des erfindungsgemäßen Messgeräts wird über den elektrischen Pfad angesteuert. Dies stellt sozusagen die minimale Ausgestaltung dar, wobei üblicherweise weitere Messgrößen oder weitere Signalpfade bereitgestellt werden können, um die Verhältnisse im Inneren des Probenraums ansteuern zu können.

Erfindungsgemäß kann der oder die Schleifringe zwischen der unteren Kammerhälfte und einem Motor auf einer Antriebswelle des Motors angeordnet sein. Alternativ ist es aber auch möglich, den oder die Schleifringe auf einer Drehachse der unteren Kammerhälfte anzuordnen.

Typischerweise wird der oder die Schleifringe auf einer Antriebswelle des Motors angeordnet sein, welcher die untere Kammerhälfte ausgelenkt. Es wäre jedoch ebenfalls möglich, die untere Kammerhälfte über einen entlang des Außenumfangs angeordneten Zahnkranz auszulenken, wobei die untere Kammerhälfte dann in ihrem Drehpunkt an einer Drehachse gehalten wird, auf der der Schleifring angeordnet sein kann

Diese Aufgabe wird auch durch ein Verfahren zur Bestimmung von Eigenschaften eines viskoelastischen Materials, insbesondere mittels eines Rheometers, gelöst, bei dem das viskoelastische Material in einen temperaturgeregelten Probenraum zwischen einer mit einem Drehmoment- oder einem kombinierten Drehmoment-/Kraftsensor versehenen oberen Kammerhälfte und einer relativ zur oberen Kammerhälfte verdrehbaren unteren Kammerhälfte eingebracht wird, die untere Kammerhälfte motorisch angetrieben wird, wobei die untere Kammerhälfte mit wenigstens einem Schleifring verbunden ist, der einen elektrischen Pfad ins Innere des Probenraums schafft, wobei die untere Kammerhälfte in Bezug zur oberen Kammerhälfte um einen Drehwinkel über 360° verdreht werden kann, um über den Kraftsensor ein Drehmoment an der oberen Kammerhälfte während des Verdrehens der unteren Kammerhälfte zu bestimmen.

Wie bereits oben erwähnt, stellt das erfindungsgemäße Verfahren darauf ab, dass bezüglich des Verdrehens der unteren Kammerhälfte keinerlei Limitierung mehr besteht.

Gemäß einer Ausführungsform des erfindungsgemäßen Verfahrens kann die untere Kammerhälfte in Bezug zur oberen Kammerhälfte um einen beliebigen Drehwinkel verdreht werden.

Hierbei können beliebige Drehwinkel und eine beliebige Zahl von Umdrehungen erreicht werden.

Gemäß einer weiteren Ausführungsform des erfindungsgemäßen Verfahrens kann die untere Kammerhälfte in Bezug zur oberen Kammerhälfte während der Messung um eine beliebige Zahl von Umdrehungen verdreht werden.

In der Praxis ist es oftmals ausreichend Auslenkungen von bis zu zehn Umdrehungen bereitzustellen.

Gemäß einer weiteren Ausführungsform des erfindungsgemäßen Verfahrens wird die untere Kammerhälfte in Bezug zur oberen Kammerhälfte während der Messung solange verdreht, bis sich ein konstanter Wert der aus den in Abhängigkeit der Zeit gemessenen Drehmomentwerten abgeleitete Viskosität einstellt.

Beim erfindungsgemäßen Verfahren kann die Zahl der Umdrehungen bzw. die Auslenkung der unteren Kammerhälfte so lange erhöht werden, bis sich ein Plateauwert der gemessenen Drehmomentwerte einstellt. Demnach ist es möglich, Viskositätsmessungen für unterschiedliche viskoelastische Materialien durchzuführen, welche über einen großen Temperatur- bzw. Druckbereich ausgeführt werden können.

Nachfolgend werden einige Ausführungsbeispiele anhand der Zeichnung näher erläutert. Es zeigen:
- Figur 1: ein erfindungsgemäßes Messgerät in einer perspektivischen Seitenansicht,
- Figur 2: ein Detail des erfindungsgemäßen Messgeräts aus Figur 1 in einer Schnittansicht,
- Figur 3: ein weiteres Detail des erfindungsgemäßen Messgeräts aus Figur 1 in einer Schnittansicht,
- Figur 4: ein Messdiagramm bei der Anwendung des erfindungsgemäßen Verfahrens, und
- Figur 5: ein weiteres Messdiagramm bei der Anwendung des erfindungsgemäßen Verfahrens.

In den Figuren sind gleiche oder funktionale gleich wirkende Bauteile mit den gleichen Bezugszeichen versehen.

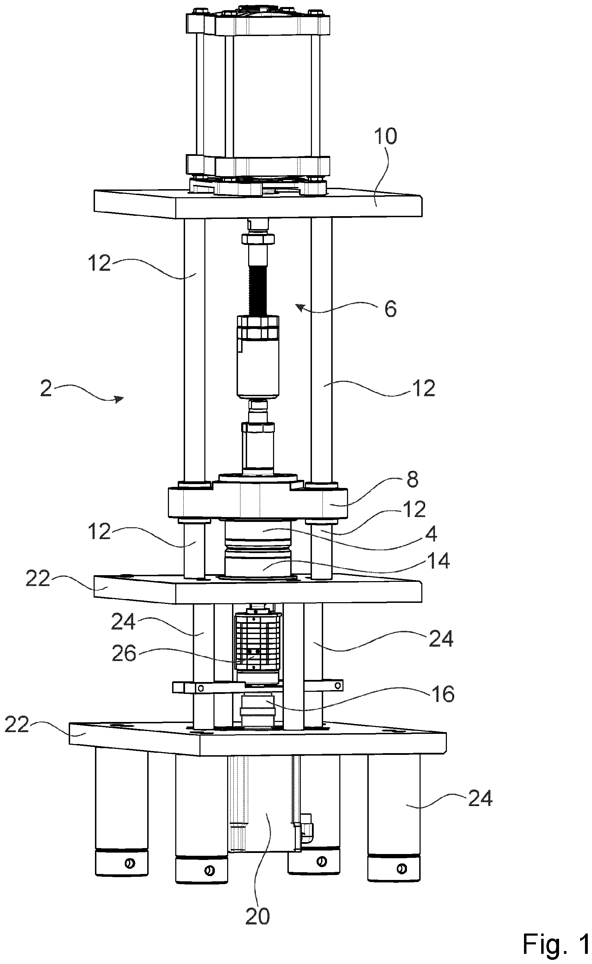

In Figur 1 ist eine Ausführungsform eines erfindungsgemäßen Messgerätes 2 in einer perspektivischen Seitenansicht gezeigt. Die Darstellung gemäß Figur 1 ist lediglich beispielhaft zu verstehen, wobei nur diejenigen Bestandteile des Messgerätes 2 gezeigt sind, welche zur Erläuterung der Erfindung relevant sind. Das Messgerät 2 ist vom Typ eines Rheometers und umfasst eine obere Kammerhälfte 4, die über ein Verschluss-System 6 mit einem Schließzylinder an einer Traverse 8 frei beweglich befestigt ist.

Des Weiteren ist die obere Kammerhälfte 4 mit einem Sensor im Inneren des Gehäuses 8 zur Bestimmung des Drehmoments oder einer Kraft und des Drehmoments verbunden. Die obere Kammerhälfte 4 ist bezüglich der Aufnahmeplatten 10 und der Längsstreben 12 zwar beweglich, wird jedoch von der Traverse 8 in ihrer Position gehalten. Gegenüberliegend zur oberen Kammerhälfte 4 ist eine untere Kammerhälfte 14 angeordnet, die über eine Antriebswelle 16 mit einem Elektromotor 20 verbunden ist.

Die untere Kammerhälfte 14 ist bezüglich der weiteren Aufnahmeplatten 22 bzw. den weiteren Längsstreben 24 drehbar. Auf der Antriebswelle 16 sind mehrere Schleifringe 26 angeordnet, die jeweils einen elektrischen Pfad zur unteren Kammerhälfte 14 schaffen. Die jeweilige Bezeichnung als obere Kammerhälfte 4 bzw. untere Kammerhälfte 14 bezieht sich auf die relative Lage zueinander sowie die übliche Anordnung bei einem Rheometer 2, jedoch nicht auf eine absolute Lage im Raum. Selbstverständlich können die beiden Kammerhälften auch anders angeordnet sein.

Die obere Kammerhälfte 4 und die untere Kammerhälfte 14 bilden zusammen eine Messkammer mit einer Kavität, nachfolgend Probenraum genannt, in ihrem Inneren. In den Probenraum wird zur Bestimmung seiner Materialeigenschaften ein viskoelastisches Material eingebracht. Durch Auslenkung der unteren Kammerhälfte 14 mittels des Elektromotors 20 kann über den Sensor 28 als Sprungantwort ein Drehmoment als Funktion der Zeit bestimmt werden, sodass eine Bestimmung der Viskosität des eingebrachten Materials möglich ist.

Während der Messung wird das Messgerät 2 mittels einer Regelung auf einer festen Temperatur gehalten. Die für die untere Kammerhälfte 14 benötigten Anschlüsse für elektrische Leitungen werden mittels des Schleifrings 26 bereitgestellt. Der Schleifring 26 ermöglicht ein Verdrehen der unteren Kammerhälfte 14, ohne dass dabei auf sich aufwickelnde Kabel Rücksicht genommen werden muss. Es ist daher möglich, die Auslenkung der unteren Kammerhälfte 14 ohne die aus dem Stand der Technik bekannt Einschränkungen zu wählen.

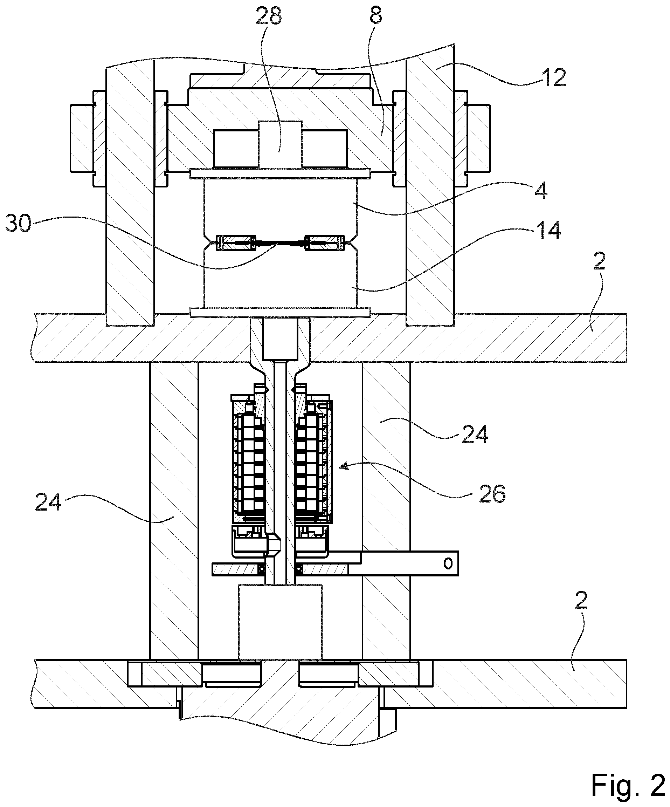

In Figur 2 ist der Aufbau des Messgerätes 2 nochmals in einer detaillierteren Schnittdarstellung gezeigt. Man erkennt, dass die untere Kammerhälfte 14 und die obere Kammerhälfte 4 zusammen ein abgeschlossenes Kammersystem bilden. Ebenso ist der Probenraum 30 zu erkennen sowie der Sensor 28.

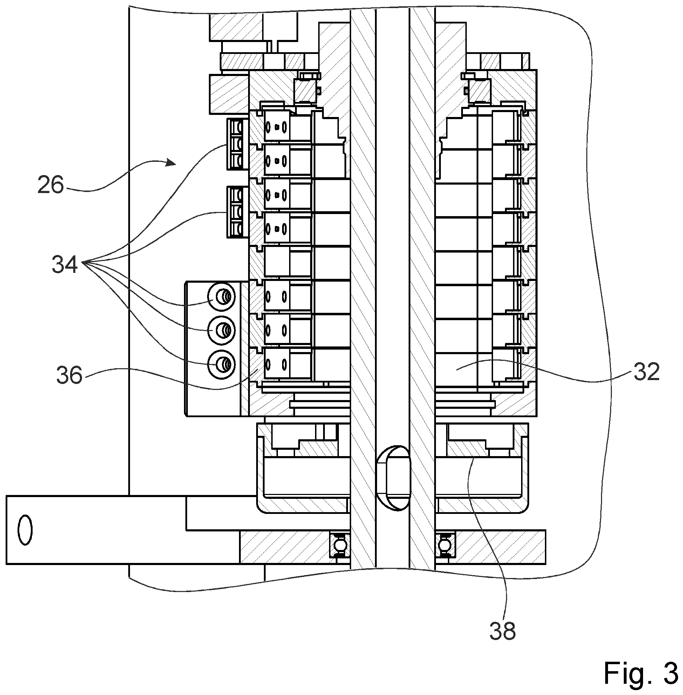

In Figur 3 ist eine weitere Detaildarstellung des Messgerätes 2 im Bereich des Schleifring 26 gezeigt. Zur Übertragung mehrerer elektrischer Signale sind hier mehrere Leiterringe 32 zu erkennen, welche mit der rotierbaren unteren Kammerhälfte 14 mechanisch verbunden sind. Zu den stationären Anschlüssen 34, welche sich relativ zu den übrigen Komponenten nicht bewegen, wird ein elektrischer Anschluss über einen Bürstenkontakt 36 auf fachübliche Weise hergestellt. Entsprechende rotierende Anschlüsse 38, welche in Figur 3 im Bereich einer Oberseite angeordnet sind, können über ein oder mehrere Kabel eine Verbindung zum Probenraum 30 im Bereich der unteren Kammerhälfte 14 schaffen.

Auf diese Weise ist es möglich, die Auslenkung der unteren Kammerhälfte 14 nahezu beliebig zu vergrößern und insbesondere auf Auslenkungen von größer 360° zu erweitern.

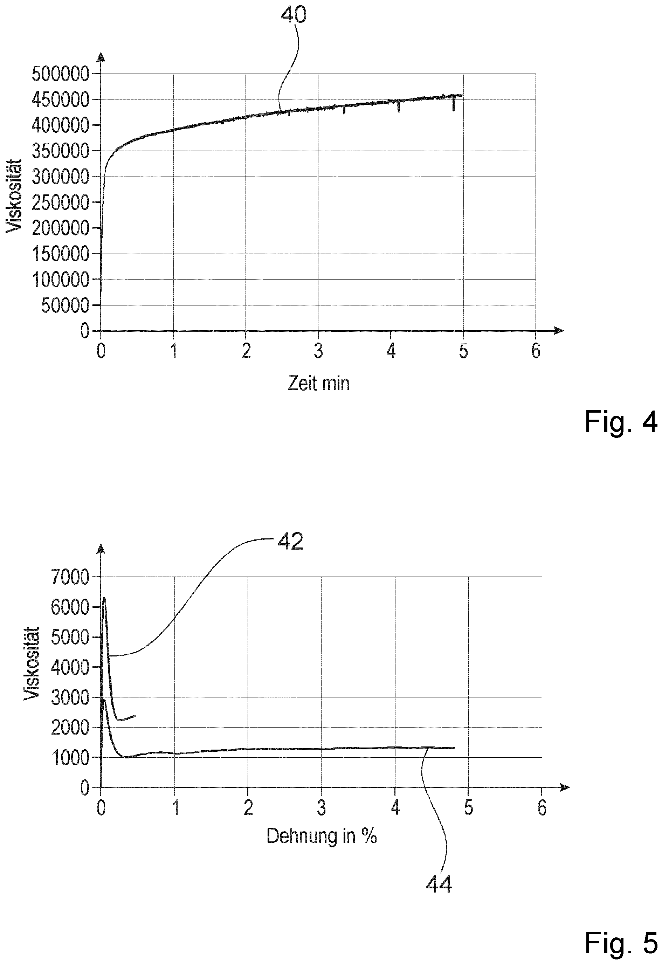

Die Notwendigkeit für eine Erhöhung der Auslenkung der unteren Kammerhälfte 14 wird am Beispiel des Messdiagramms der Figur 4 erläutert. In Figur 4 ist der typische Verlauf der Viskosität 40 als Funktion der Zeit eingezeichnet. Hierbei wurde die maximale Auslenkung auf 360° limitiert. Man erkennt, dass die Viskosität keinen konstanten Wert erreicht, der für eine Viskositätsbestimmung mittels der Sprungantwort notwendig wäre.

Im Vergleich dazu sind in Figur 5 zwei Messungen 42 und 44 eingezeichnet, wobei die Messung mit dem Bezugszeichen 42 auf 360° Auslenkung beschränkt ist und für die Messung mit dem Bezugszeichen 44 zehn Umdrehungen, d. h. eine Auslenkung von 3600° gewählt wurde. Man erkennt, dass die Viskosität erst nach ungefähr 5 Umdrehungen ein konstanter Verlauf einstellt. Dieser Plateauwert entspricht der tatsächlichen Viskosität des untersuchten Materials. Beim Verlauf gemäß der Messung mit dem Bezugszeichen 42 kann dieser Wert nicht bestimmt werden oder müsste geschätzt werden.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

### Liste der Bezugszeichen:

- 2: Messgerät
- 4: untere Kammerhälfte
- 6: Verschluss-System
- 8: Traverse
- 10: Aufnahmeplatte
- 12: Längsstrebe
- 14: obere Kammerhälfte
- 16: Antriebswelle
- 20: Elektromotor
- 22: weitere Aufnahmeplatte
- 24: weitere Längsstrebe
- 26: Schleifring
- 28: Sensor
- 30: Probenraum
- 32: Leiterring
- 34: stationärer Anschluss
- 36: Schleifkontakt
- 38: rotierender Anschluss
- 40: Viskositätsverlauf
- 42: Viskositätsverlauf
- 44: Viskositätsverlauf

## Patentansprüche

1. Messgerät, insbesondere ein Messgerät (2) vom Typ eines Rheometers, zur Bestimmung von Eigenschaften eines viskoelastischen Materials, welches in einem temperaturgeregelten Probenraum (30) zwischen einer mit einem Sensor (28) versehenen oberen Kammerhälfte (4) und einer relativ zur oberen Kammerhälfte (4) verdrehbaren unteren Kammerhälfte (14) eingebracht oder einbringbar ist, wobei die untere Kammerhälfte (14) motorisch angetrieben oder antreibbar ist, wobei die untere Kammerhälfte (14) mit wenigstens einem Schleifring (26) verbunden ist, der einen elektrischen Pfad ins Innere des Probenraums (30) an der unteren Kammerhälfte (14) schafft, so dass die untere Kammerhälfte (14) in Bezug zur oberen Kammerhälfte (4) um einen Drehwinkel über 360° verdrehbar ist.

2. Messgerät nach Anspruch 1, wobei die untere Kammerhälfte (14) in Bezug zur oberen Kammerhälfte (4) um einen beliebigen Drehwinkel und eine beliebige Zahl von Umdrehungen verdrehbar ist.

3. Messgerät nach Anspruch 1 oder 2, wobei mehrere Schleifringe (26) vorgesehen sind, die jeweils einen elektrischen Pfad ins Innere des Probenraums schaffen.

4. Messgerät nach einem der Ansprüche 1 bis 3, wobei der oder die Schleifringe (26) wenigstens den elektrischen Pfad zur Ansteuerung der Temperaturregelung im Inneren des Probenraums (30) ermöglicht.

5. Messgerät nach einem der Ansprüche 1 bis 4, wobei der oder die Schleifringe (26) zwischen der unteren Kammerhälfte (14) und einem Motor (20) auf einer Antriebswelle (16) des Motors (20) angeordnet ist oder sind.

6. Messgerät nach einem der Ansprüche 1 bis 4, wobei der oder die Schleifringe (26) zwischen auf einer Drehachse der unteren Kammerhälfte (14) angeordnet ist oder sind.

7. Messgerät nach einem der Ansprüche 1 bis 6, wobei der Sensor (28) ein Drehmoment- oder ein kombinierter Drehmoment-/Kraftsensor ist.

8. Verfahren zur Bestimmung von Eigenschaften eines viskoelastischen Materials, insbesondere mittels eines Rheometers, bei dem das viskoelastische Material in einen temperaturgeregelten Probenraum (30) zwischen einer mit einem Drehmoment- oder einem kombinierten Drehmoment-/Kraftsensor (28) versehenen oberen Kammerhälfte (4) und einer relativ zur oberen Kammerhälfte (4) verdrehbaren unteren Kammerhälfte (14) eingebracht wird, die untere Kammerhälfte (14) motorisch angetrieben wird, wobei die untere Kammerhälfte (14) mit wenigstens einem Schleifring (26) verbunden ist, der einen elektrischen Pfad ins Innere des Probenraums (30) schafft, wobei die untere Kammerhälfte (14) in Bezug zur oberen Kammerhälfte (4) um einen Drehwinkel über 360° verdreht werden kann, um über den Sensor (28) wenigstens ein Drehmoment an der oberen Kammerhälfte (4) während des Verdrehens der unteren Kammerhälfte (14) zu bestimmen.

9. Verfahren nach Anspruch 8, wobei die untere Kammerhälfte (14) in Bezug zur oberen Kammerhälfte (4) um einen beliebigen Drehwinkel und eine beliebige Zahl von Umdrehungen verdreht werden kann.

10. Verfahren nach Anspruch 9, wobei die untere Kammerhälfte (14) in Bezug zur oberen Kammerhälfte (4) während der Messung solange verdreht wird, bis sich ein konstanter Wert der aus den in Abhängigkeit der Zeit gemessenen Drehmomentwerten abgeleitete Viskosität einstellt.
